# EUROPEAN PATENT SPECIFICATION

(11) **EP 1 490 755 B1**
(45) Date of publication and mention of the grant of the patent: **17.12.2008**
(21) Application number: 02780237.0
(22) Date of filing: 30.10.2002
(51) Int. Cl.: H04L 12/56, H04L 29/06

(54) **METHOD FOR CREATING A MAP OF AVAILABLE RESOURCES WITHIN AN IP NETWORK**
VERFAHREN ZUR ERZEUGUNG EINES PLANS VERFÜGBARER BETRIEBSMITTEL IN EINEM IP-NETZWERK
PROCEDE DE CREATION DE CARTE DES RESSOURCES DISPONIBLES DANS UN RESEAU A PROTOCOLE IP

(30) Priority: 04.04.2002 US 369564 P
(43) Date of publication of application: 29.12.2004
(73) Proprietor: Operax AB, 977 75 Luleå (SE)
(72) Inventor: NORRGÅRD, Joakim, 972 32 Luleå (SE); JOHANSSON, Joachim, S-977 52 Luleå (SE)
(74) Representative: Holmberg, Nils Anders Patrik
(86) International application number: PCT/SE2002/001968
(87) International publication number: WO 2003/085514

(56) References cited:
- US-A- 5 886 643
- US-A- 6 131 117
- SCHELEN O. ET AL.: 'Performance on QoS agents for provisioning network resources' QUALITY OF SERVICE, IWQOS'99, INTERNATIONAL WORKSHOP 31 May 1999 - 04 June 1999, pages 17 - 26, XP002905426
- BANNERMAN S. ET AL.: 'Network topology configuration management experience report' TELECOMMUNICATIONS INFORMATION NETWORKING ARCHITECTURE CONFERENCE PROCEEDINGS, TINA'99 12 April 1999 - 15 April 1999, pages 137 - 139, XP010351096
- GAVALAS D. ET AL.: 'Implementing a highly scalable and adaptive age based management framework' GLOBAL TELECOMMUNICATIONS CONFERENCE, GLOBECOM '00 IEEE 27 November 2000 - 01 December 2000, pages 1458 - 1462, XP002959489

## Description

### FIELD OF INVENTION

The present invention relates to an Internet Protocol (IP) network.

In particular, the present invention relates to a resource manager within the IP network that provides a map of available network resources of the IP network, a method thereof and a computer program product for pergforming the steps of said method.

### BACKGROUND OF THE INVENTION

A current networking trend is to provide "IP all the way" to wired and wireless units. Some current objectives are to simplify the infrastructure, to support a wide range of applications, and to support diverse user demands on the communication service. To allow this, there is a need for scalable solutions supporting service differentiation and dynamic resource management in IP networks.

The Internet is now becoming a ubiquitous multi-service network. Consequently, there are strong commercial reasons for network operators and equipment providers to offer Quality-of-Service (QoS) differentiation in IP networks.

In the research and standardisation bodies the development of QoS support has progressed from providing signalled solutions for the Internet to now recognising that more stateless solutions are favourable. RSVP (Resource Reservation Protocol) is the signalling protocol standardised to set up per-flow quality of service in routers supporting IntServ (Integrated Services) along the path. Each router along the path performs admission control and then recognises the individual application data streams to provide the service expected. One opinion is that this model is too complex and does not scale enough to be used in the backbone of the Internet. Another opinion is that the model scales well enough to be used close to the edges of the network.
The scalability problems of per-flow QoS management in routers have resulted in a new approach, known as the differentiated services architecture (DiffServ). The objective is to provide scalable QoS support by avoiding per-flow state in routers. The basic idea is that IP packet headers include a small label (known as the diffserv field) that identifies the treatment (per-hop behaviour) that packets should be given by the routers.

One advantage of differentiated services is that the model preserves the favourable properties that made the Internet successful; it supports scalable and stateless forwarding over interconnected physical networks of various kinds. The standard model is, however, limited to differentiated forwarding in routers and therefore the challenge lies in providing predictable services to end users.

Qualitative services (relatively better than best-effort services, but depending on where the traffic is sent and on the load incurred by others at the time) can be provided by relying only on diffserv support in routers and resource management mechanisms for semi-static admission control and service provisioning. To provide quantitative (minimum expectation) service, resources must be dynamically administrated by the resource management mechanisms and involve dynamic admission control to make sure that there are sufficient resources in the network to provide the services committed.

### Routing in IP networks

Data packets in IP networks are routed (i.e. the transmission path the packets are carried through the network) using one or several of the well known routing protocols such as OSPF, IS-IS or RIP. OSPF and IS-IS are classified as a link-state protocol and RIP as a distance vector protocol. The protocols are based on the algorithms they use for route computation and distribution of routing information.

All routers running a link state protocol within a domain have a complete routing view of the network, knowing all the networks and routers within the domain. Based on this information, routes are typically computed using an algorithm that provides the shortest path.

A distance vector router knows only the routers and networks in its immediate surrounding that are directly connected. Each distance vector router advertises which networks it can reach and at what it costs. The cost is a weight and is e.g. associated with the speed of the network or another parameter. These advertisements are propagated only to directly connected neighbours, which in turn advertise the reachability further on. This advertisement only includes the "best" path to reach the network and not all possible paths.

### The resource manager

A resource manager has previous been introduced as a QoS agent as described in Olov Schelén, Quality of Service Agents in the Internet, Doctoral Thesis, Department of Computer Science and Electrical Engineering, Division of Computer Communication, Luleå University of Technology, Luleå, 1998.

The resource manager is an entity that keeps track of the available physical resources, reserves physical resources and performs admission control on incoming requests for physical resources from clients. The resource manager is implemented within a server or a router. To perform the admission control, the resource manager also stores a history of previously admitted resource reservations. The resource manager takes it decision to admit a new request for resources based on the total amount of available resources, the amount currently reserved by previously reservations and the amount of resources requested. The resource reservations may or may not be scheduled over time. One request may involve admission control on multiple resource repositories that may consist of different types of resources. The most common type of resource managed is bandwidth. There are specific requirements for resource management mechanisms. To provide service to end users, they must be aware of network resources and may schedule them for the committed service at any granularity (e.g. for a port range, for aggregate traffic between a pair of subnets, etc).

The mechanisms should provide accurate resource control both in core domains and in its connected leaf domains. In leaf domains, there may be requirements for very fine granular resource control (e.g. per application data stream), especially at licensed band wireless access where bandwidth is so expensive that spectrum efficiency is the overall goal. The performance must also be sufficient to handle mobility and frequent hand-over. In core domains, dynamic aggregated resource management, e.g. per destination domain, per port range for IP telephony, etc. may be provided for scalability reasons. Internet Service Providers need support for negotiating bulk bandwidth with each other by using reservations in advance and time-dependent contracts (e.g. time of day, day of week, etc.). In enterprise networks, there are often well-provisioned LANs and bottleneck leased lines to interconnect sites. They need support for deploying new internal services, e.g. multimedia conferencing, that require certain amounts of resources, and for controlling the resource requirements for these applications must be controlled to avoid excessive negative impact on other traffic.

The resource manager, as discussed above, is also adapted to provide a dynamic topology map for the network. Said resource manager is also referred to as a topology aware resource manager. The map is stored in a topology database and shows how the network elements are connected and hence how it is possible to route data packets. The availability of correct routing and resource information is essential for a system which performs resource management and admission control.

If aggregated or otherwise inexact information is used for admission control there is always an element of uncertainty involved, which increases with higher utilization of the network. Aggregated information is a set of information flows coming from different sources to a common node, i.e. the aggregation node, and wherein the set of information is further transported to a subsequent node. The aggregated information is often defined by a larger granularity than a separate information flow, which results in that detailed information about the separate information flows does no longer exist for aggregated information flows. Having detailed information at hand is a substantial advantage as it eliminates the uncertainties. The risks coupled to the uncertainties involve admitting to much prioritised traffic that can lead to packet loss for all previously admitted traffic.

Given the ingress node, or the source network address, and the destination network address, a resource manager, which is not subjected to the above-mentioned uncertainties, must be able to discover the exact path through its domain to know exactly which resources that are affected. This requires that the resource manager knows the topology of the network, i.e. the routing tables of each router in its domain. Using a link state protocol, a resource manager can participate in the routing and act as a link state router, without advertising any routes of its own, to collect the needed information in the topology database. The basic principle on which link state protocols are built ensures that all routers have the same complete information, which is required by the topology aware resource manager.

When a domain is routed using a distance vector protocol, or even static routing, the simple method of peering (i.e. two network elements exchanging information) cannot be used since all routers only have information about other network elements that are directly connected to them. In this case, the necessary information is obtained from network elements within the network by e.g. using methods according to the traceroute protocol or the Simple Network Management Protocol (SNMP).

### Resource map

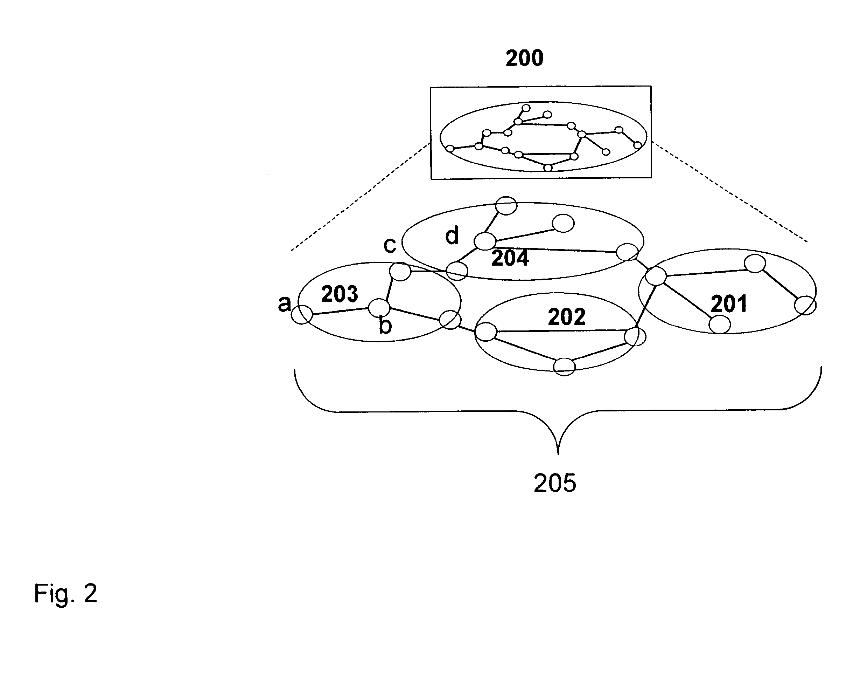

A map of the physical resources is provided by combining routing information within the topology database with the physical resource information. The map is called a resource map and one example is illustrated in **figure 2****.** The resource map 200 can be used to evaluate requests for resources from a source to a destination. Thus, the resource map 200 shows the topology of the network and the total available physical resources at each link.

The resource map is created by collecting routing information and a resource manager can then collect resource information. Interface type and interface speed are examples of two important pieces of information that is collected and that the resource manager requires. The first collected information describes the path of a packet through the network while the second collected information describes the amount of available resources. A resource map of this type is described in Olov Schelen's Doctoral Thesis e.g. on pages 26, 41 and 86. A drawback with this resource map is that it has been shown that the information is not always correct which results in that resources have to be over-reserved in order to guarantee the requested amount of resources.

Prior art document SCHELEN O. ET AL.: 'Performance on QoS agents for provisioning network resources' QUALITY OF SERVICE, IWQOS'99, INTERNATIONAL WORKSHOP published 04 June 1999, pages 17 - 26 (XP002905426) describes a set of routers maintaining a topology map of network resources. There is no distinction between physical and logical resources.

### SUMMARY

Thus, the object of the present invention is to provide a correct resource map of an IP network.

The above-mentioned object is achieved by a method, a resource manager and a computer program product set forth in the characterizing part of the independent claims.

The method provided by the present invention comprising the steps of: combining a topology map of said IP network with resource information that comprises information about identities of logical addresses and quantity of logical addresses, performing a mapping between said logical addresses and a physical interface within said IP network, makes it possible to provide a correct resource map.

The computer program product provided by the present invention comprising the software code portions for performing the steps of said method, makes it possible to provide a correct resource map.

The computer program product provided by the present invention comprising readable program for causing a processing means within a server and/or a router within an IP network to control the execution of the steps of said method, makes it possible to provide a correct resource map.

The resource manager comprising means for combining said map with resource information that comprises information about identities and amount of logical addresses, and means for performing a mapping between said logical addresses and a physical interface within said IP network, makes it possible to provide a correct resource map.

Preferred embodiments are set forth in the depending claims.

An advantage with the present invention is that more resources are not reserved than what is required in the network since available resources are not overrated. Thus, quality of service for all flows traversing the network is improved.

### BRIEF DESCRIPTION OF THE DRAWINGS

**Figure 1** shows an example of a cost effective network design according to prior art.
**Figure 2** illustrates a resource map.
**Figure 3** shows how logical addresses are connected to a physical interface in accordance with the present invention.
**Figure 4** shows a flowchart of the method according to the present invention.
**Figure 5** shows a resource manager in accordance with the present invention.

### DETAILED DESCRIPTION OF THE INVENTION

**Figure 2** shows an exemplary IP network 205 where the present invention may be implemented. The network comprises at least one network domain 201-204 comprising a plurality of routers a-d. The network may also comprise one or more servers. At least two routers located within the same network domain or in different domains comprise respectively a resource manager.

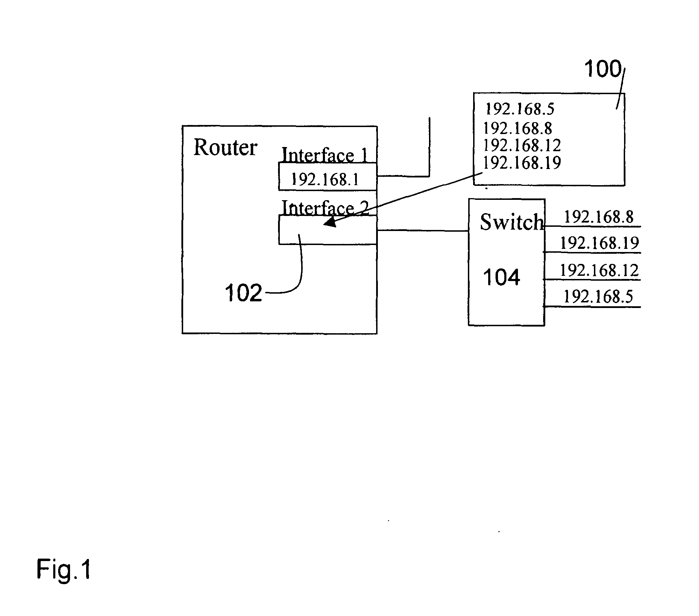

As described above, the resource information from the resource map according to prior art is often incorrect. According to the present invention as illustrated in **figure 1****,** that depends on that router interfaces and router ports are expensive network elements, and therefore, several logical addresses 100 are often assigned to the one physical interface 102 of a router by connection via a less expensive link layer switch 104. The resource map indicates that there exists an amount of physical resources for each logical address when in fact this amount is shared between all logical address that are connected to the same physical interface. Therefore, the resource map does not provide a correct representation of available resources, since the physical resources are overrated.

A correct resource map is accomplished by the present invention by adding, to the physical resource information, how the physical resources are used by the network on the network layer, i.e. the mapping from a logical address to a physical resource. It should be noted that the physical resource is also referred to as a physical interface and a logical address is also referred to as a virtual address. Physical resource information comprises identities of and the amount of physical resources on the link layer. The physical resource information is combined with topology information obtained from a topology aware resource manager. A topology awareness function is manually configured, or implemented by another suitable method. The topology information is routing information that describes the route of a packet which traverses the network layer and a logical map of the topology of the network is thus provided.

The mapping from the logical address (e.g. an IP address) to the physical resource is performed by a resource manager, to determine if the physical resource is shared between multiple logical addresses in accordance with the present invention. However it is also possible to use another entity with a similar functionality for the mapping. The mapping information may be obtained by using SNMP that collects information from different MIB tables when a new router is discovered or manually configured. Exactly which SNMP MIB tables to request information from depends on which RFC standards the router supports. An RFC is a specification of one or more functionalities. The RFCs (Request For Comments) are available on the Internet on www.ietf.org and managed by the Internet Engineering Task Force (IETF).

It is described below how a physical interface is located based on an IP-address via SNMP. In the early RFCs, that is found in various tables, in the later RFCs, a root in a stack must be found. The RFCs are replaced on a regular basis when new functionality in the network is introduced, and the amendments are described in the new RFC.

Examples of the mapping from logical addresses to physical resources are described below for various alternatives depending on which RFCs that are supported.

If the router supports RFC 1158 [Rose M. T., Management Information Base for network management of TCP/IP-based internets: MIB-II, RFC1158] and RFC 1213 [McCloghrie K. et Al, Management Information Base for Network Management of TCP/IP-based internets: MIB-II, IETF, RFC 1213] the physical interfaces are described in interface table ifTable. The actual mapping between the IP address table and the physical interfaces is described by the interface index ipAdEntIflndex field in addressing information table ipAddrTable.

The mapping from the IP address to the outgoing physical interface in the routing table is described by the ipRouteEntIflndex field in the RC 1158 ipRoutingTable for RFC 1158 or in ipRouteTable for RFC 1213.

Finally, the ipNetToMediaIfIndex field in the IP address translation table ipNetToMedia which maps the logical address (ipNetToMediaNetAddress) to its physical interface index may also be used. It obsoletes the earlier atTable that is used in RFCs earlier than RFC 1158.

If RFC 1354 [Baker F., IP Forwarding Table MIB, RFC1354] is supported, the IP Forwarding Table, ipForwardTable, in RFC1354 supersedes the ipRouteTable in RFC1213. (iproutetable does not exist in RFC1158, it is introduced in RFC 1213). In the IP Forwarding table, ipForwardTable, the mapping is described by the field ipForwardIfIndex. If RFC 2096 [Baker F., IP Forwarding Table MIB, RFC2096] is supported, RFC 2096 supersedes RFC1354 but ipForwardIfIndex is consistent throughout the change. In RFC 2096, IP CIDR Route Table, ipCidrRouteTable is added together with an interface field, ipCidrRouteIfIndex.

In RFC2011 [McCloghrie K., SNMPv2 Management Information Base for the Internet Protocol using SMIv2, RFC2011] the address translation table is described in the table, ipNetToMediaTable, and the interface field is the field, ipNetToMediaIfIndex. The field (ipNetToMediaIfIndex) comprises the same mapping as the field atTable.

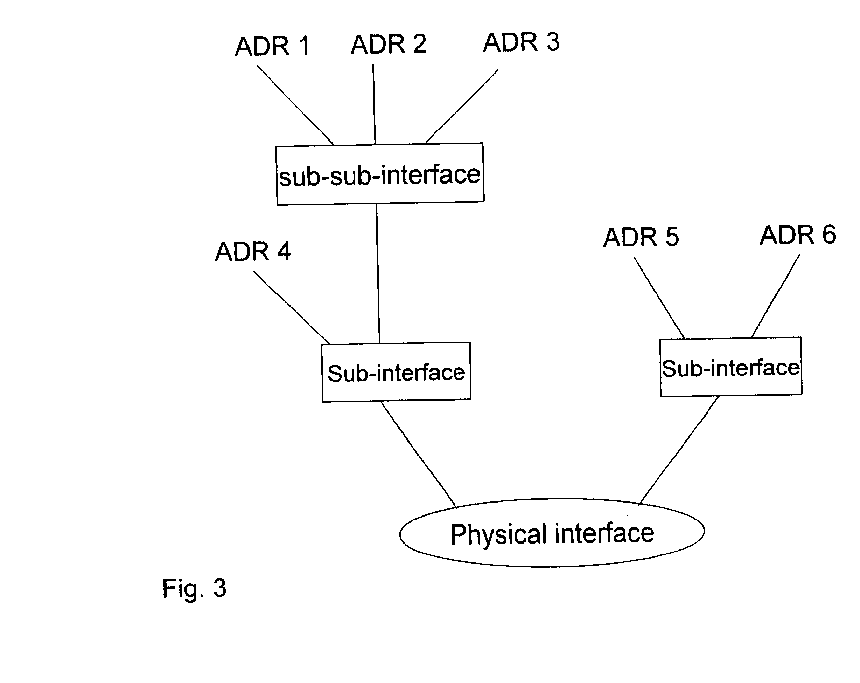

In RFC 1573 [McCloghrie K. et Al, Evolution of the Interfaces Group of MIB-II, RFC 1573] the concept of an interface stack was introduced to describe the relationships between the interfaces. This means that an interface in the interface table is not necessarily a physical interface, but it can also be a sub-interface or a sub-sub-interface of a physical interface. This is illustrated in **figure 3****.** In order to determine how a physical resource is mapped to such an interface and how the physical resource is shared if the physical resources are shared by a plurality of virtual interfaces, information from the interface stack must be collected and analysed. If RFC2233 (McCloghrie K. et Al, The Interfaces Group MIB using SMIv2, RFC2233) is supported, RFC2233 supersedes RFC1573 and if RFC2863 [McCloghrie K. et Al, The Interfaces Group MIB, RFC2] is supported, RFC2863 supersedes RFC2233 but the interface stack is consistent throughout these changes. (RFCs with a higher number have priority over the RFCs with a lower number. The valid functionality is described in the RFC with higher priority.) However, old routers may still be run according to a superseded RFC such as RFC 1573 and RFC2233.

If the router does not comply with any of these standards and logical interfaces are also represented in the interface table, then the description ifDescr and type ifType of the interfaces in the table of interfaces interfaces.ifTable must be collected. By using the interface type and the description, it is possible to do vendor specific parsing to deduct which interfaces are logical interfaces and which physical interfaces they are connected to.

By combining the information from the logical topology map and the information of available physical resources that comprises the mapping between logical addresses and the physical resources, a correct resource map is provided.

Thus, by using the above described method, it is possible to build a correct physical as well as logical representation of the IP network and thereby perform admission control based on the correct amount of available resources.

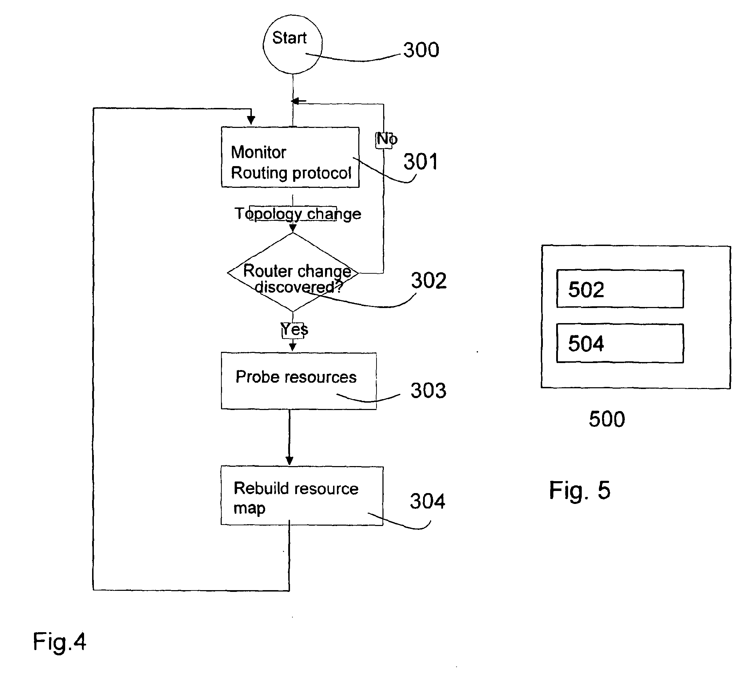

One implementation of the method is depicted by the flowchart in **Figure** 4.
**300**:Start
**301**:Routing protocols are monitored and routing information is obtained in order to create a topology map.
**302**:If a change in the topology map is detected, it is investigated if a router change has occurred.
**303**:If there is a router change, the resource (e.g. the router) is probed in order to obtain information from the changed router. The topology information is combined with the information from the changed router. If there is no router change, step 301 is repeated.
**304**: A mapping between the IP address of the changed router and the physical interface is performed in order to obtain information of available physical resources. A resource map is rebuilt (or created) by the combination of information from the topology map and information about the available physical resources.

The method is implemented by means of a computer program product comprising the software code means for performing the steps of the method. The computer program product is run on processing means in a router or a server within an IP network. The computer program is loaded directly or from a computer usable medium, such as a floppy disc, a CD, the Internet etc.

The method according to the present invention is implemented within a resource manager, or within another entity with a similar functionality, in a router or a server within an IP network.

The resource manager 500 in accordance with **figure 5** comprises means 502 for combining a topology map of said IP network with resource information that comprises information about identities of logical addresses and quantity of logical addresses and means 504 for performing a mapping between said logical addresses and a physical interface within said IP network.

The present invention is not limited to the above-described preferred embodiments. Various alternatives, modifications and equivalents may be used. Therefore, the above embodiments should not be taken as limiting the scope of the invention, which is defined by the appending claims.

## Claims

1. Method for creating a map of available physical interfaces within an IP network, by performing the step of:
- *combining* (303) a topology map of said IP network with resource information that comprises information about identities of logical addresses and quantity of logical addresses, the method is **characterised in** the further step of:
- *performing* (304) a mapping between said logical addresses and a physical interface within said IP network.

2. Method according to claim 1, wherein the topology map is obtained by a topology aware resource manager.

3. Method according to any of claims 1-2, wherein the mapping is performed by collecting information from network elements, e.g. routers by using SNMP.

4. Method according to any of claims 1-3, wherein said mapping is performed by a resource manager.

5. Method according to claim 4, wherein said resource manager is implemented within a router or a server.

6. Method according to any of claims 1-5, wherein said logical address is an IP address.

7. A computer program product directly loadable into a server and/or a router within an IP network comprising the software code portions for performing the steps of any of claims 1-6.

8. A computer program product stored on a computer usable medium, comprising readable program for causing a processing means within a server and/or a router within an IP network to control the execution of the steps of any of claims 1-6.

9. Resource manager for creating a map of available physical interfaces within an IP network, comprising means (502) for combining a topology map of said IP network with resource information that comprises information about identities of logical addresses and quantity of logical addresses, the resource manager is **characterised in that** it further comprises means (504) for performing a mapping between said logical addresses and a physical interface within said IP network.

10. Resource manager according to claim 9, wherein it further comprises means for creating a topology map.

11. Resource manager according to any of claims 9-10, wherein the resource manager further comprises means for obtaining the physical resource information by collecting information from network elements, e.g. routers by using SNMP.

12. Resource manager according to any of claims 9-11, wherein said resource manager is implemented within a router or a server.

13. Resource manager according to any of claims 9-12, wherein said logical address is an IP address.

## Patentansprüche

1. Verfahren zur Erstellung eines Abbildes von verfügbaren physikalischen Schnittstellen innerhalb eines IP-Netzwerkes mit dem Schritt:
- Kombinieren (303) eines Topologie-Abbildes des IP-Netzwerkes mit Ressourceninformationen, die Informationen über Identitäten von logischen Adressen und Quantitäten von logischen Adressen enthalten, wobei der Verfahren durch den zusätzlichen Schritt **gekennzeichnet** ist:
- Durchführen (304) einer Zuordnung zwischen den logischen Adressen und einer physikalischen Schnittstelle innerhalb des IP-Netzwerks.

2. Verfahren nach Anspruch 1, bei dem das Topologie-Abbild durch einen Topologie bewussten Ressourcenmanager erhältlich ist.

3. Verfahren nach einem der Ansprüche 1 bis 2, wobei die Zuordnung durch Sammeln von Informationen von Netzwerkelementen, z.B. Routern unter Verwendung von SNMP, durchgeführt wird.

4. Verfahren nach einem der Ansprüche 1 bis 3, wobei die Zuordnung durch einen Ressourcenmanager durchgeführt wird.

5. Verfahren nach Anspruch 4, wobei der Ressourcenmanager innerhalb eines Routers oder eines Servers implementiert ist.

6. Verfahren nach einem der Ansprüche 1 bis 5, wobei die logische Adresse eine IP-Adresse ist.

7. Ein Computerprogrammprodukt unmittelbar ladbar in einen Server und/oder einen Router innerhalb eines IP-Netzwerkes mit Softwarequellcodeanteilen zur Durchführung der Schritte nach einem der Ansprüche 1-6.

8. Ein Computerprogrammprodukt gespeichert auf einem computerverwendbaren Medium, aufweisend ein lesbares Programm zur Veranlassung eines Ausführungsmittels innerhalb eines Servers und/oder eines Routers innerhalb eines IP-Netzwerks zur Kontrolle der Ausführung der Schritte nach einem der Ansprüche 1-6.

9. Ressourcenmanager zum Erzeugen eines Abbildes von verfügbaren physikalischen Schnittstellen innerhalb eines IP-Netzwerks mit Mitteln zum Kombinieren eines Topologie-Abbildes des IP-Netzwerks mit Ressourceninformationen, die Informationen über Identitäten von logischen Adressen und Quantitäten von logischen Adressen enthalten, wobei der Ressourcenmanager **dadurch gekennzeichnet ist, dass** er zusätzlich Mittel zum Durchführen einer Zuordnung zwischen den logischen Adressen und einer physikalischen Schnittstelle innerhalb des IP-Netzwerks enthält.

10. Ressourcenmanager nach Anspruch 9, weiter aufweisend Mittel für das Erzeugen eines Topologie-Abbildes.

11. Ressourcenmanager nach einem der Ansprüche 9 bis 10, wobei der Ressourcenmanager weiter aufweist Mittel zum Erhalten der physikalischen Ressourceninformationen durch Sammeln von Informationen von Netzwerkelementen, z.B. Routern unter Verwendung von SNMP.

12. Ressourcenmanager nach einem der Ansprüche 9 bis 11,
wobei der Ressourcenmanager in einem Router oder einem Server implementiert ist.

13. Ressourcenmanager nach einem der Ansprüche 9 bis 12,
wobei die logische Adresse eine IP-Adresse ist.

## Revendications

1. Procédé pour créer une carte d'interfaces physiques disponibles au sein d'un réseau IP, en effectuant l'étape consistant à :
- combiner (303) une carte topologique dudit réseau IP avec des informations de ressource qui comprennent des informations concernant des identités d'adresses logiques et une quantité d'adresses logiques, le procédé est **caractérisé par** l'étape supplémentaire consistant à :
- effectuer (304) un mappage entre lesdites adresses logiques et une interface physique au sein dudit réseau IP.

2. Procédé selon la revendication 1, dans lequel la carte topologique est obtenue par un gestionnaire de ressources tenant compte de la topologie.

3. Procédé selon l'une quelconque des revendications 1 ou 2, dans lequel le mappage est effectué en collectant des informations à partir d'éléments de réseau, par exemple des routeurs en utilisant SNMP.

4. Procédé selon l'une quelconque des revendications 1 à 3, dans lequel ledit mappage est effectué par un gestionnaire de ressources.

5. Procédé selon la revendication 4, dans lequel ledit gestionnaire de ressources est mis en oeuvre dans un routeur ou un serveur.

6. Procédé selon l'une quelconque des revendications 1 à 5, dans lequel ladite adresse logique est une adresse IP.

7. Produit de programme informatique chargeable directement dans un serveur et/ou un routeur à l'intérieur d'un réseau IP comprenant les parties de code logiciel pour effectuer les étapes de l'une quelconque des revendications 1 à 6.

8. Produit de programme informatique stocké sur un support utilisable sur ordinateur, comprenant un programme lisible pour amener un moyen de traitement dans un serveur et/ou un routeur à l'intérieur d'un réseau IP à contrôler l'exécution des étapes de l'une quelconque des revendications 1 à 6.

9. Gestionnaire de ressources pour créer une carte d'interfaces physiques disponibles au sein d'un réseau IP, comprenant des moyens (502) pour combiner une carte topologique dudit réseau IP avec des informations de ressource qui comprennent des informations concernant des identités d'adresses logiques et une quantité d'adresses logiques, le gestionnaire de ressources est **caractérisé en ce qu'**il comprend en outre des moyens (504) pour effectuer un mappage entre lesdites adresses logiques et une interface physique au sein dudit réseau IP.

10. Gestionnaire de ressources selon la revendication 9, dans lequel il comprend en outre des moyens pour créer une carte topologique.

11. Gestionnaire de ressources selon l'une quelconque des revendications 9 ou 10, dans lequel le gestionnaire de ressources comprend en outre des moyens pour obtenir les informations de ressources physiques en collectant des informations à partir d'éléments de réseau, par exemple des routeurs en utilisant SNMP.

12. Gestionnaire de ressources selon l'une quelconque des revendications 9 à 11, dans lequel ledit gestionnaire de ressources est mis en oeuvre dans un routeur ou un serveur.

13. Gestionnaire de ressources selon l'une quelconque des revendications 9 à 12, dans lequel ladite adresse logique est une adresse IP.
